# EUROPEAN PATENT APPLICATION

(11) **EP 2 698 731 A1**
(43) Date of publication of application: **19.02.2014**
(21) Application number: 13180294.4
(22) Date of filing: 13.08.2013
(51) Int. Cl.: G06F 17/30

(54) **Method and apparatus for displaying a content of portable terminal that uses a cloud service**

(30) Priority: 13.08.2012 KR 20120088249
(71) Applicant: Samsung Electronics Co., Ltd, Gyeonggi-do 443-742 (KR)
(72) Inventor: Kim, Minkyung, 443-742 Gyeonggi-do (KR); Kim, Dohyoung, 443-742 Gyeonggi-do (KR); Lim, Wansoo, 443-742 Gyeonggi-do (KR); Kim, Meeyoung, 443-742 Gyeonggi-do (KR); Kim, Youngmi, 443-742 Gyeonggi-do (KR)
(74) Representative: Harrison Goddard Foote LLP

(57) **Abstract**

A method of displaying a content of a portable terminal connectable with a cloud server. The method includes displaying a content list including a first object correspondi ng to a first content stored in the portable terminal and a second object corresponding to a second content stored in the cloud server, determining whether a condition for a displ ay change of the content list has occurred, and changing the second object to a third obj ect and displaying the third object if the condition occurs.

## Description

### TECHNICAL FIELD

The present disclosure relates to a method and apparatus for displaying contents of a portable terminal that uses a cloud service, and more particularly, to a method and apparatus for recognizing a condition for a display change of a content list and displaying contents according to the source of the content.

### BACKGROUND

Along with the development of communication technology, portable terminals, such as a smart phones and a table PCs, are being widely distributed. As such, various functions in addition to voice call and a text message services are being added to portable terminals, and the size, design, resolution and user interface of the portable terminals are also being diversified.

Recently, a portable terminal provides cloud service to share content stored in the portable terminal or a certain terminal with other terminals. The cloud service is a service that allows a user to upload user content such as a movie, a picture, music, and a document, or to download the uploaded contents. Users may safely store user contents in a cloud server, namely, an external server, and may overcome limitations of space using the cloud service. Furthermore, users may read and correct a document anywhere, anytime. Recently, as interest in the cloud service increases, the cloud service is being provided in various forms. As such, a method for providing a function specialized for the cloud service environment that satisfies user's requests is being suggested.

### SUMMARY

To address the above-discussed deficiencies, embodiments of the present disclosure provide a method and apparatus for recognizing a condition that requires an indication of a source of a content, and changing the display of an object corresponding to the content in a portable terminal that uses a cloud service.

Certain embodiments of the present disclosure include a method of displaying a content of a portable terminal connectable with a cloud server includes: displaying a content list including a first object corresponding to a first content stored in the portable terminal and a second object corresponding to a second content stored in the cloud server; determining whether a condition for a display change of the content list has occurred; and changing the second object to a third object and displaying the third object if the condition occurs.

Certain embodiments of the present disclosure include a portable terminal for using a cloud service includes: a wireless communication unit for connection with a cloud server that provides a cloud service; a display unit for displaying a first object corresponding to a first content stored in the portable terminal and a second object corresponding to a second content stored in the cloud server; an input unit for a user's input related with the first content and the second content; and a controller for controlling to display a content list including the first object and the second object, determining whether a condition for a display change of the content list occurs, and controlling to change the second object to a third object and display the third object.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIG. 1 illustrates a portable terminal using a cloud service of the present disclosure;

FIG. 2 illustrates a configuration of portable terminal according to embodiments of the present disclosure;

FIG. 3 illustrates a method of displaying contents of a portable terminal according to embodiments of the present disclosure;

FIGS. 4A and 4B illustrate a method of displaying contents of a portable terminal according to embodiments of the present disclosure;

FIG. 5 illustrates a method of displaying contents of a portable terminal according to embodiments of the present disclosure;

FIGS. 6A, 6B, and 6C illustrate a method of displaying contents of a portable terminal according to embodiments of the present disclosure;

FIGS. 7A and 7B illustrate a method of displaying contents of a portable terminal according to embodiments of the present disclosure; and

FIGS. 8A and 8B illustrate a method of displaying contents of a portable terminal according to embodiments of the present disclosure.

### DETAILED DESCRIPTION

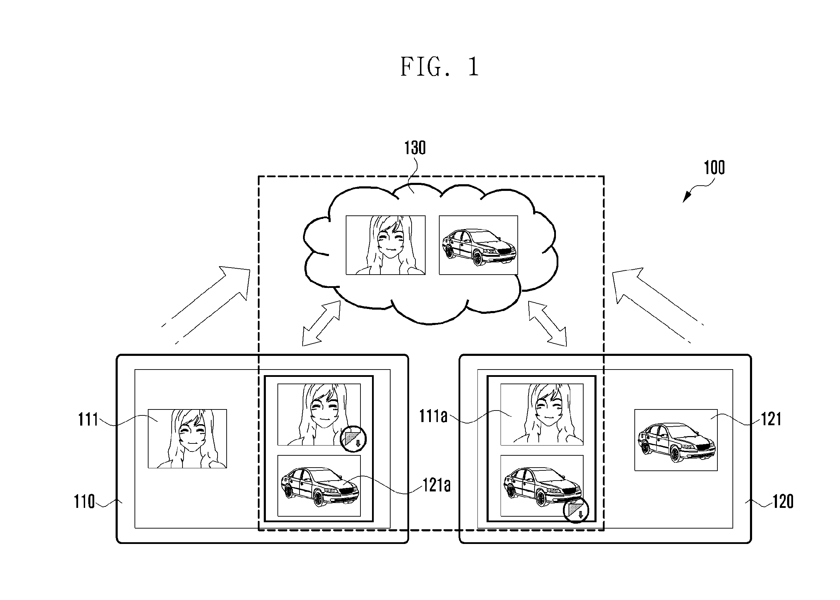

FIGURES 1 through 8B, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged electronic communication device. Embodiments of the present disclosure are described with reference to the accompanying drawings in detail. The same reference numbers are used throughout the drawings to refer to the same or like parts. Detailed descriptions of well-known functions and structures incorporated herein may be omitted to avoid obscuring the subject matter of the present disclosure.

In the present disclosure, "content" is data provided in a digital form, such as a symbol, letter, voice, sound and image, and can include a file, picture file, a music file, a document file, and related execution information and additional information. In the present disclosure, the content may be classified into a local content stored in a portable terminal and a cloud content stored in a cloud server.

In the present invention, an "object" refers to an object corresponding to a content displayed on a display unit. The object can include a content execution icon, a content thumbnail icon, etc. In the present disclosure, the object can be divided into a local object corresponding to a local content and a cloud object corresponding to a cloud content.

In the present disclosure, a "display change condition" is a condition when the source of a content needs to be displayed, and a condition for a display change of a content list may occur by a user input or a system input. The display change condition by the user input can include a condition of a request for content editing (e.g., deletion, movement, copy, etc.), a condition of a request for sharing a content, a condition of a request for content setting (e.g., wallpaper setting, ring tone setting, etc.) based on user's intention. The display change condition by the system input can include a condition when a network is disconnected and a condition when the memory capacity of the portable terminal is not sufficient.

In the present disclosure, "synchronization" refers to a series of processes where a cloud server transmits meta data of cloud contents to a portable terminal, and the portable terminal receives meta data and displays a cloud object corresponding to the cloud contents on a display unit based on the received meta data.

The method and apparatus for displaying contents according to the present disclosure may be applied to a portable terminal. Such a portable terminal can be a mobile phone, a smart phone, a tablet PC, a hand-held PC, a portable multimedia player (PMP), and a personal digital assistant (PDA). Hereinafter, it is assumed that a method and apparatus for displaying a content according to the present disclosure is applied to a portable terminal.

FIG. 1 illustrates a portable terminal using a cloud service of the present disclosure.

Referring to FIG. 1, a cloud-based content providing system 100 includes one or more portable terminals 110 and 120 and a cloud server 130. Here, the portable terminals 110 and 120 and the cloud server 130 are connected through a network, and the portable terminals 110 and 120 are connected to a wired or wireless network. Though not illustrated, the portable terminals 110 and 120 and the cloud server 130 include a network device for supporting transmission and reception of data.

The cloud server 130 is connected to one or more portable terminals 110 and 120, and provides various services such as a content upload, download and synchronization. In particular, the cloud server 130 provides at least one storage space that is shared and used by one or more portable terminals 110 and 120. That is, the cloud server 130 allocates at least one storage space to authorized portable terminals 110 and 120 (e.g., user subscribed to a cloud service account). As such, a user of the authorized portable terminals 110 and 120 may access the allocated storage space of the cloud server 130 and may upload, download and delete contents.

In the present disclosure, the cloud server 130 transmits metadata of contents stored in the storage space of the cloud server 130 to the portable terminals 110 and 120. Here, the metadata can include a thumbnail file such as a photo file, a moving-image file, and a document file, a preview file, a pre-listen file, and related information stored in the cloud server 130.

The portable terminal 110 or 120 is a terminal that provides a cloud service, and can include a notebook computer, a smart phone, a tablet PC, a mobile communication terminal, a hand-held PC, a PMP, and a PDA. Further, the method and apparatus for providing content in the present disclosure is not limited to application to the portable terminal 110 or 120. For example, in the present disclosure, a method and apparatus for displaying a content, which uses a cloud service, can also be applied to a smart TV and a desktop computer.

In the present disclosure, the portable terminal 110 or 120 connects to the cloud server 130, and uploads or downloads content. In order for the portable terminal 110 or 120 to connect to the cloud server 130, the portable terminal 110 or 120 transmits a connection request message to the cloud server 130 based on the address information (e.g., URL, IP, etc.) of the cloud server. Then the cloud server 130 can allow connection of the authorized portable terminal 110 or 120 by performing a procedure (e.g., a cloud service account ID, a password input, etc.) for authentication.

The portable terminal 110 or 120 transmits a request signal for synchronization with the cloud server 130 to the cloud server 130 through an Internet network (e.g., wired or wireless). The cloud server 130 transmits metadata of cloud contents to the portable terminal 110 or 120 in response to the synchronization request signal. Generally, synchronization refers to a scheme for maintaining data stored in two or more physically different data spaces as the same data. In the present disclosure, synchronization refers to a series of processes where the cloud server 130 transmits metadata of the cloud contents to the portable terminal, and the portable terminal 110 or 120 receives the metadata and displays the cloud object corresponding to the cloud contents based on the metadata.

For example, in the case of cloud-based contents-providing system, the first portable terminal 110 uploads photo content "A" 111 stored in the storage unit of the first portable terminal 110 to the cloud server 130, and the second portable terminal 120 uploads photo content "B" 121 stored in the storage unit of the second portable terminal 120 to the cloud server 130. At this time, the first portable terminal 110 and the second portable terminal 120 are portable terminals that have access to one storage space provided in the cloud server 130. That is, the first portable terminal 110 and the second portable terminal 120 share one storage space by connecting to the cloud server 130 using the same account. As such, the cloud server 130 store photo content "A" uploaded from the first portable terminal 110 and photo content "B" uploaded from the second portable terminal 120 as the cloud content of the cloud server 130.

If a synchronization signal is requested from the first portable terminal 110, the cloud server 130 provides metadata for photo content "B" stored in the cloud server as the first portable terminal 110. The first portable terminal 110 can check the content stored in the cloud server 130 by receiving metadata for photo content "B" from the cloud server 130 and storing the metadata in the storage unit. Further, the first portable terminal 110 displays an object 121 a (e.g., a thumbnail) for photo content "B" in the display unit based on metadata of photo content B.

In contrast, if a synchronization server is requested from the second portable terminal 120, the cloud serve 130 provides metadata of photo content "A" stored in the cloud server to the second portable terminal 120. Then, the second portable terminal 120 can check the content stored in the cloud server 130 by receiving metadata for photo content "A" provided from the cloud server and storing the metadata in the storage unit. Further, the second portable terminal 120 can display the object 121 a (e.g., a thumbnail) for photo content "A" based on metadata of photo content "A."

As described above, if a synchronization request signal is generated in a cloud service environment, the content providing system based on the cloud server according to embodiments of the present disclosure provides metadata of contents stored in the cloud server, that is, cloud contents, to the portable terminal.

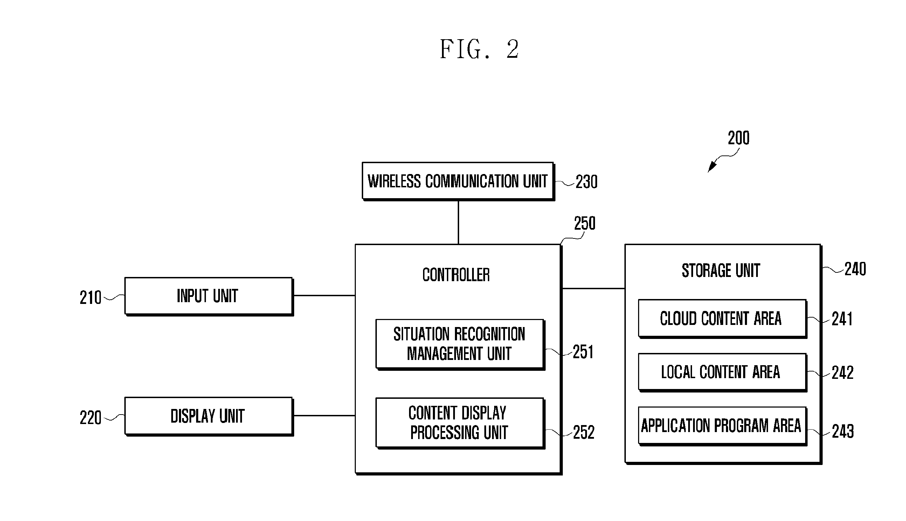

FIG. 2 illustrates a configuration of a portable terminal according to embodiments of the present disclosure.

Referring to FIG. 2, the portable terminal of the present disclosure includes an input unit 210, a display unit 220, a wireless communication unit 230, a storage unit 240, and a controller 250.

The input unit 210 includes a module related with the input of the portable terminal 200. The input unit 210 receives signals and various letter information sets inputted in connection with the setting and control of functions of the portable terminal, and transmit the signals and information sets to the controller 250. The input unit 210 can be include one or a combination of input means such a touch pad, a touch screen, a keypad of a general key array, and a function key to have been set to perform a certain function.

The display unit 220 displays information inputted by user or information provided to user as well as various menus of the portable terminal 200. The display unit 220 provides various screens according to a use of the portable terminal. The display unit 220 provides a standby screen, a menu screen, a message writing screen, a calling screen, a game screen, a music replay screen, a moving-image replay screen, etc.

In the present disclosure, the display unit 220 provides a content list screen. The display unit 220 displays a content list screen including local objects corresponding to contents stored in the portable terminal 220 and cloud objects corresponding to the cloud contents (e.g., a thumbnail included in metadata provided from the cloud server, etc.). The content list screen includes at least one or a combination of a music content list screen, a moving-image content list screen, a document content list screen and a photo content list screen.

The display unit 220 can be in a form of a flat display panel such as a liquid crystal display (LCD), an organic light emitted diode (OLED), and an active matrix organic light emitted diode.

When the LCD or the OLED is formed as a touch screen form, the display unit 220 can be included in an input means. In the portable terminal 200, if the display unit 220 is formed as a touch screen form, the display unit 220 includes a touch panel that senses a touch operation. The touch panel can be configured to convert a change such as pressure applied to a certain part or capacitance occurred in a certain part of the display unit 220 into electrical input signals. A resistive type, a capacitive type, an electromagnetic induction type and a pressure type, etc. may be applied to the touch panel. The touch panel 111 is configured to detect a touch pressure as well as a touch location and area. When there is a touch input for the touch panel, the corresponding input signal is transmitted to the controller 250. Then, the controller 250 checks touch input information of user from the input signal, and performs functions corresponding to the information.

The wireless communication unit 230 performs communication of the portable terminal 200. The wireless communication unit 230 forms a communication channel which is set with the mobile communication network that can be supported, and may perform a communication such as a voice communication, a video communication and a data communication. The wireless communication unit 230 includes a radio frequency (RF) transmission unit that up-converts and amplifies the frequency of the transmitted signal and an RF reception unit that low-noise-amplifies and down-converts the received signal.

In the present disclosure, the wireless communication unit 230 performs transmission and reception of at least one content through linkage with an external server (e.g., a cloud server). The wireless communication unit 230 forms a communication channel for cloud server connection under the control of the controller 250. The wireless communication unit 230 is configured as a communication environment connected with a cloud server, for example, a communication module that allows network connection or a communication module that can be connected to another network apparatus connected to the network. Further, the wireless communication unit 230 includes a mobile communication module (e.g., 3-generation mobile communication module, a 3.5-generation mobile communication module or a 4-generation mobile communication module), a short range communication module (e.g., a Wi-Fi module) and a digital broadcast module (e.g., a DMB module).

In the present disclosure, the wireless communication unit 230 receives transmission and reception of authentication information data for authentication confirmation, and information on cloud contents provided by the cloud server, i.e., metadata, in the cloud server connection process.

The storage unit 240 stores various data generated in the portable terminal in addition to the operation system of the portable terminal 200 and various applications. The data includes data generated in the execution of the application of the portable terminal and all types of data that may be generated using the portable terminal or received from an external device (e.g., an external server, another portable terminal or a personal computer) and can then be stored. The storage unit 240 stores various setting information for the user interface provided in the portable terminal and the portable terminal function process.

In the present disclosure, the storage unit 240 includes a cloud content area 241, a local content area 242, and an application program area 243. The cloud content area 242 stores information on the cloud contents provided from the cloud server, i.e., metadata. The metadata can include a cloud object corresponding to cloud contents and related information. The cloud object can include a moving-image thumbnail, a music thumbnail and an image thumbnail. Here, metadata including a moving-image thumbnail can include streaming information for a moving-image preview (e.g., 1 min. replay information), and metadata including a music thumbnail can include streaming information for a music pre-listen (e.g., 30 sec. replay information).

The local content area 242 stores digital contents which have been uploaded, downloaded and generated from the portable terminal. The local content area 242 includes contents such as a moving-image file, a photo file, a music file and a document file, the related information and additional information.

Application programs needed for function operation are stored in the application program area 243 of the storage unit 240. The storage unit 240 stores application programs needed for an operating system, a calling function, a moving-image or music replay function, an image display function and a camera photographing function for booting the portable terminal 100 under control of the controller 250. Further, the storage unit 240 stores an application program needed for a broadcast view function, an audio recording function, a calculator function and schedule management function, etc.

The controller 250 controls overall operation of the portable terminal and a signal flow between internal components of the portable terminal 200, and performs a function of processing data. Further, the controller 250 controls a power supply to internal components in the battery. Further, the controller 250 executes various applications stored in the storage unit.

In the present disclosure, the controller 250 controls a series of operations related with the function performance according to embodiments of the present disclosure. The controller 250 provides a content list screen by displaying an object corresponding to the contents stored in the portable terminal so as to provide the content list screen. The controller 250 provides a content list screen including a local object corresponding to the local content and a cloud object corresponding to the cloud content. Further, the controller 250 determines whether a content display change condition occurs. If a content display change condition occurs, the controller 250 changes the display of the cloud object corresponding to the cloud content to distinguish the local content from the cloud content. For example, if the a content display change condition occurs, the controller 250 includes the condition identifier, for example, the cloud display icon, in the cloud object based on the condition information, and the cloud object is displayed. The condition identifier will be described with reference to FIG. 1.

The controller 250 includes a condition recognition management unit 251 and a content display processing unit 252 to control the above function operation.

The condition recognition management unit 251 determines whether a condition for changing a content display is generated.

The condition recognition management unit 251 determines whether a content display change condition has occurred by a user's input or a system input. The condition recognition management unit 251 determines whether a request event such as content editing such as deletion and copying, a request event for content sharing, and a request event for wallpaper setting, ring tone setting, etc. occur. Further, the condition recognition management unit 251 determines whether a network disconnection condition and an insufficient memory capacity condition occurs. If it is determined that a content display change condition has occurred, the display change condition information is transmitted to the content display processing unit 252.

The content display processing unit 252 display includes the condition identifier in the cloud object based on the content display change condition and then displays the cloud object. For example, the content display processing unit 252 divides the condition identifiers as shown in Table 1 below according to the content display change condition. Table 1 is merely an example for illustrating the present condition, and can include more examples.

**Table 1**

| Tap | files | status | ID (icon) |
|---|---|---|---|
| Local contents | real data file | waiting a unloaded | waiting icon |
| | | unloading | Upload icon (retry after failure-> deep until completion) |
| | | upload completed | No icon |
| | | Upload failed | failure icon |
| | meta data file | N/A | N/A |
| Cloud contents | real data file | Downloading | Download icon |
| | | Download completed | No icon |
| | meta data | only meta files in Folder/ playlist | Cloud display icon (meta icon) |
| | meta data folder | only meta files in Folder/ playlist | no icon |
| | cloud folder | only in gallery album view | Cloud folder icon |
| | cloud file(real data) | only in edit mode | Cloud display icon |
| | | | |

When connected to the cloud server and uploading or downloading contents, the content display processing unit 252 displays an icon indicating that the content is being uploaded or downloaded. Further, if a network disconnection condition occurs, the content display processing unit displays a network disconnection icon in the cloud object.

Likewise, in the present disclosure, the controller 250 recognizes the content display change condition, and includes the condition identifier in the local object corresponding to the local content or the cloud object corresponding to the cloud content to display the source of the content, and then displays the local object or the cloud object. As such, user may determine whether the content used in the portable terminal is a local content stored in the portable terminal or a cloud content stored in the cloud server. Further, user may check the condition such as an upload, download and a network connection failure through the condition identifier displayed in the object corresponding to the content.

Further, the present disclosure describes a method of distinguishing the local content and the cloud content, i.e., only two contents, and displaying a corresponding object, but the present disclosure distinguishes content stored only in the portable terminal, a content stored in the cloud server, and a content stored in both the portable terminal and the cloud server, i.e., three contents. Hence, in the present disclosure, the portable terminal controls to display an object corresponding to the content distinguished as three contents, and display the condition identifier according to the occurrence of the display change condition.

There may be various modifications according to the convergence trend of digital devices, and thus not all modifications are be listed here, but the portable terminal 100 according to the present disclosure may further include a sensor module for sensing information related with the location change of the portable terminal, a GPS module for measuring the location of the portable terminal 100, and components that are not mentioned above, such as a camera module. Further, the portable terminal 100 of the present disclosure may exempt certain components from the above configuration depending on the provided form or may be substituted by another configuration. Further, in the present disclosure, the input unit can be a touch pad and a track ball, etc. as well as a touch screen 110 and a key input unit 120.

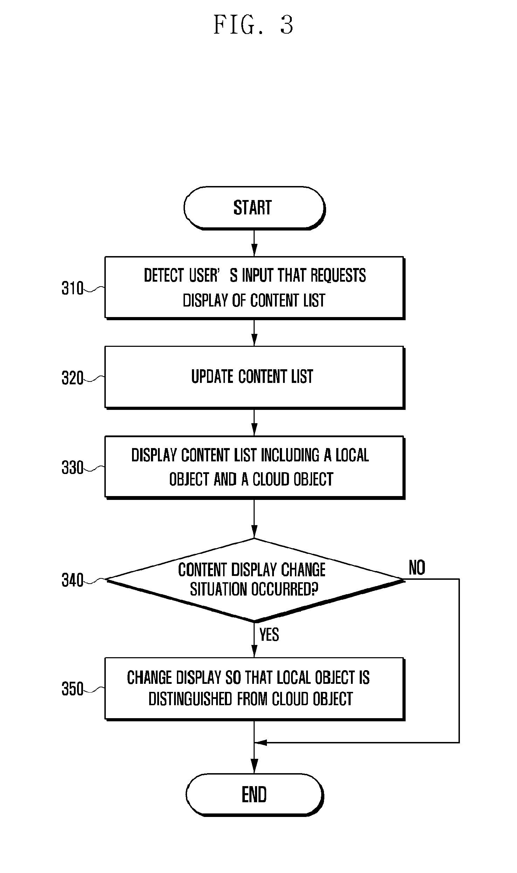

FIG. 3 illustrates a method of displaying contents of a portable terminal according to embodiments of the present disclosure.

Referring to FIG. 3, in block 310, the controller 130 detects a user's input that requests a content list display.

For example, the controller 250 detects a user's input that selects the execution icon of the content display application from the input unit 210. At this time, the content display application includes a photo application that manages photo content, a moving-image application that manages moving-image content, a music application that manages music content, a document application that manages document content, and so forth.

In block 320, the controller 250 updates a list of contents. For example, in case the portable terminal 200 subscribes to the cloud service, the portable terminal 200 can be synchronized with the cloud server so that the portable terminal 200 receives metadata of the contents uploaded in the cloud server. In the present disclosure, the process of updating the content list can be updated by user's selection, and the portable terminal is updated by periodic synchronization with the cloud server. Hence, in the present disclosure, step 320 can be omitted.

For example, before displaying a content list in the display unit 210, the controller 250 displays a message confirming whether to update the content list, and updates the content list according to the user's request. If an update request signal occurs, the controller 250 controls the wireless communication unit 230 to be connected to the cloud server. The controller 250 transmits a connection request message to the cloud server based on the address information (URL, IP, etc.) of the cloud server through the wireless communication unit 230. Then the cloud server performs a procedure for authentication of the portable terminal. To this end, the portable terminal 200 provides authentication information (e.g., the ID and password) to the cloud server, and the cloud server allows connection of the portable terminal having an authority after passing confirmation of the authentication information. The cloud server checks the type of the content to be displayed in the content list, and transmits metadata corresponding to the content to the portable terminal. Then the portable terminal 200 includes a cloud object corresponding to the cloud content in the content list based on metadata received from the cloud server.

In block 330, the controller 250 is controlled to display the updated content list in the display unit 220. The controller 250 controls to include a local object corresponding to the local content and a cloud object corresponding to the cloud content in the content list, and controls the display unit to display the content list. Here, the content list can include at least one or a combination of a photo content list, a moving-image content list, a document content list and a music content list.

In block 340, after displaying the content list, the controller 250 determines whether a content display condition event occurs. The controller 250 determines whether a content display change by a user's input or a system input occurs. The controller 250 determines whether a request event such as deletion and copy, a request event for sharing contents, and a request event for wallpaper setting, ring tone setting, etc. occurs. The controller 250 determines whether a network disconnection condition or insufficient memory capacity occurs.

For example, the content display change condition can include an input event of calling a photo list for photo message transmission, an input event of calling a content list for sharing contents, an input of calling a content list for content deletion, an input of calling a photo list to set the wallpaper, and an input of calling a music list to set a ring tone, but the present disclosure is not limited thereto.

In block 350, when a content display change condition occurs, the controller 250 changes the display of the cloud object so that the local content can be easily distinguished from the cloud content. The controller 250 includes the condition identifier (e.g., a cloud display icon, a network connection impossible icon, an upload icon, a download icon, etc.) in the cloud object, and then display the cloud object. If a content display change condition does not occur in block 340, the process terminates.

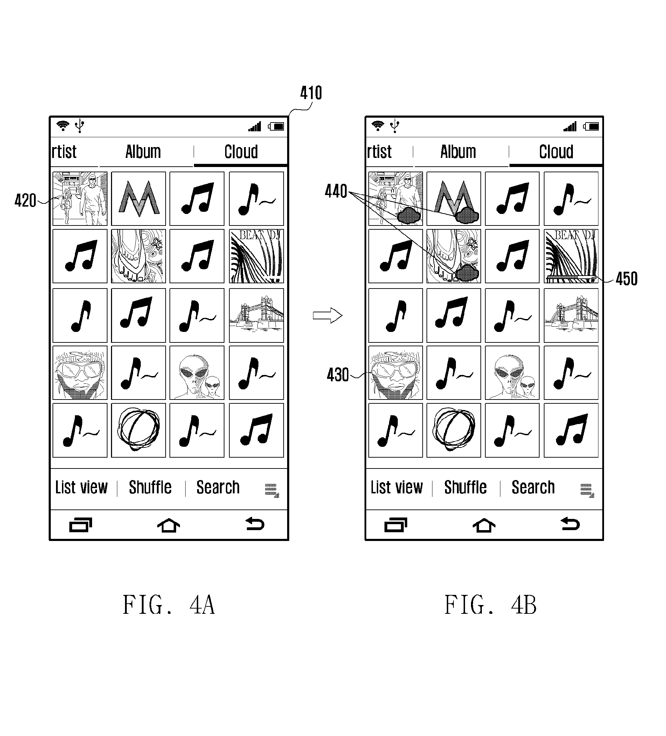

FIG. 4 illustrates a method of displaying contents of a portable terminal according to embodiments of the present disclosure.

Referring to FIG. 4A, the display unit 220, under control of the controller 250, displays a content list screen 410 including an object 420. Here, the content list screen 410 can include at least one or a combination of a music content list screen, a moving-image content list screen, a document content list screen, and a photo content list screen. Information on the local object corresponding to the local content and the information on the cloud content, namely, the cloud object based on the metadata can be included in the content list screen 410. To this end, before displaying the music content list, the controller 250 connects to the cloud server to be synchronized, and receives metadata for the cloud content stored in the cloud server. The details thereof have been described with reference to FIG. 3.

In certain embodiments of the present disclosure, the display unit 220, under control of the controller 250, displays the music content list screen 410. In a state where the music content list screen is displayed, a user may use and replay the local content and the cloud content without distinction. For example, a user may select a local object to replay a music file or select the cloud object and pre-listen to the music.

In a state where the content list is displayed, a user may operate the input unit for deletion of the content. Then the controller 250 determines that a request event for content deletion, namely, a content display change condition has occurred. Then, the controller 250 changes the display of the object in the content list so that the local content can be easily distinguished from the cloud content.

For example, the display unit 220 can identify the cloud content and display the identifier, such as a cloud display icon 440, in the cloud object under control of the controller as illustrated in FIG. 4B. At this time, the identifier 440 is not included in the local object 430, but it is possible to display an icon which may be distinguished from the cloud display icon 440. The cloud display icon is displayed as an icon of a cloud shape meaning the cloud, but the present disclosure is not limited thereto. Further, the display unit 220 connects to the cloud server and displays a download display icon 450 indicating that the download is being performed under control of the controller 250.

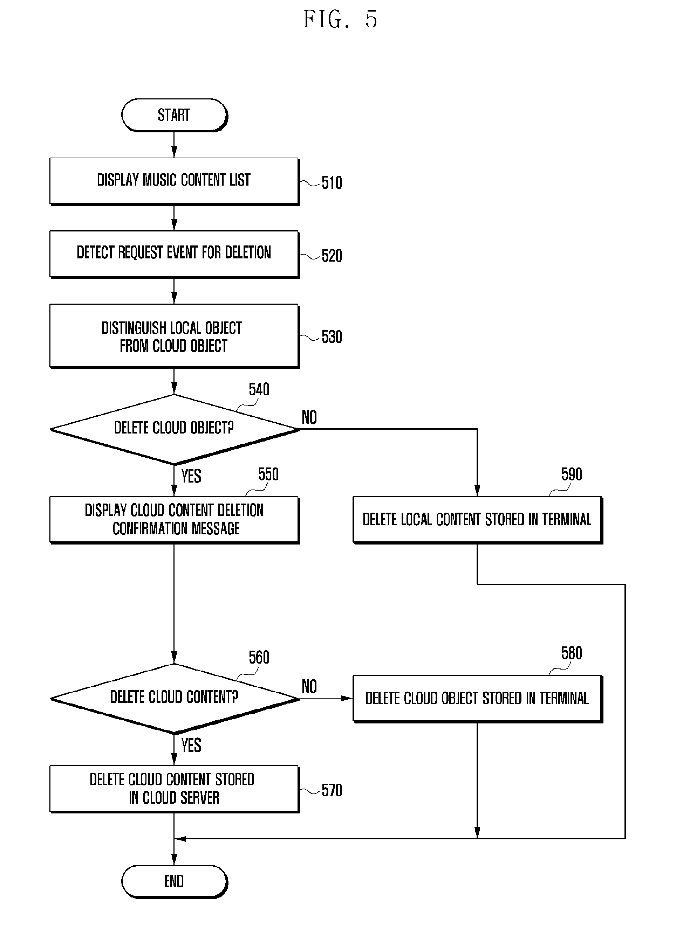

FIG. 5 illustrates a method of displaying contents of a portable terminal according to another embodiment of the present disclosure.

Referring to FIG. 5, the controller 250 displays a music content list according to a user's input, in block 510. Here, the music content list is the music content list including the local content and the cloud content. The controller 250 detect a request event for deletion of the music content 520. For example, the user requests an execution screen for selectively deleting the content among music content lists. If a request event for deleting the music content is generated, the controller 250 determines that a content display change condition has occurred.

In block 530, when a content display change condition occurs, the controller 250 changes the display of the object so that the local content may be easily distinguished from the cloud content. For example, the controller 250 controls the identifier indicating the content provided from the cloud server, e.g., the cloud display icon, to be displayed in the cloud object. The controller 250 detects a user's input for selecting a cloud object for deletion of the content in block 540. In case the cloud object is selected, the controller 250 displays a confirmation message confirming whether to delete the cloud content 550.

In block 560, the controller 250 determines whether to delete the cloud content stored in the cloud server based on the user's input. If the user input is determined as a request of deleting the cloud content stored in the cloud server, metadata for the cloud content stored in the storage unit 240 is deleted, and connection to the cloud server 250 is made, and the cloud content related with the selected object is deleted in block 570. If the user input is determined as a request for deletion of the cloud object, only the metadata for the selected cloud object, i.e., the cloud content stored in the storage unit 240, is deleted 580.

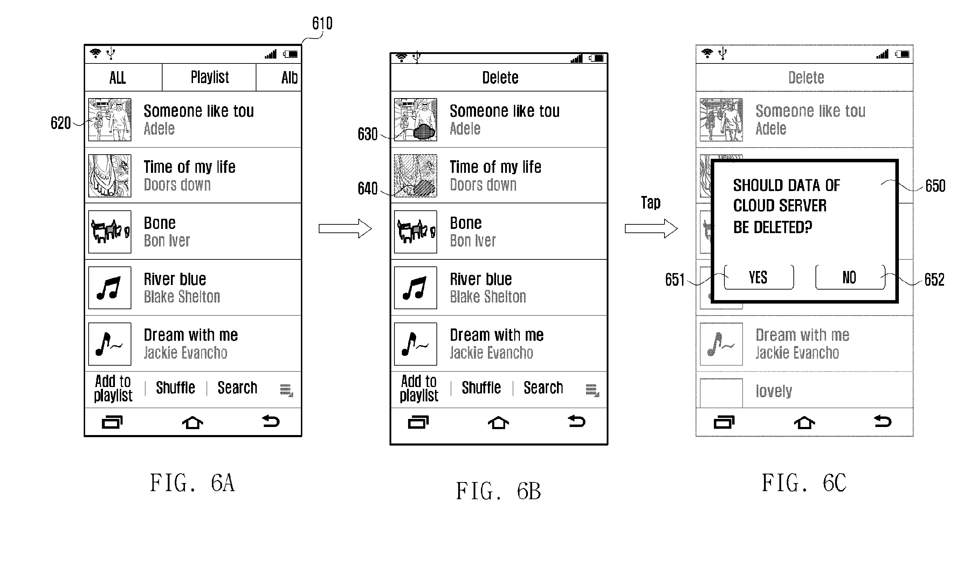

Referring to FIG. 6A, the display unit 220, under control of the controller 250, displays a content list screen 610. The content list screen 610 can include a local object corresponding to a local content and information on cloud contents, namely, a cloud object based on metadata. In the certain embodiments of the present disclosure, the display unit 220 displays a music content list screen 610 under control of the controller 250.

In a state where the music content list screen 610 is displayed, user may operate an input unit 210 to delete a certain content. Then, the controller 250 determines that a request event for content deletion, namely, a content display change situation, has occurred. Then, the controller 250 changes a display of an object so that the local content may be easily distinguished from the cloud content.

For example, the display unit 220, under control of the controller 250, can identify the cloud content and display a cloud display icon 630 on the cloud content, as shown in FIG. 6B. Here, the cloud display icon 630 is be displayed as an icon of a cloud shape meaning a cloud, but the present disclosure is not limited thereto.

In such a condition, the controller 250 detects a user's selection input for deleting the cloud object 640 from the input unit. The controller 250 checks the deletion request for the cloud object 640, and displays a message window 650 confirming whether to the cloud content stored in the cloud server together in the display unit 220 as illustrated in the screen of FIG. 6C. Such a message window 650 can include a YES key 651 and a NO key 652. The display unit 220, under control of the controller 250, can provide the message window 650 as a pop-up window.

In this situation, the user may select YES key 651 or NO key 652. When the selection for YES key 651 is detected from the input unit 210, the controller 651 delete the selected cloud object, namely, metadata, in response thereto, and deletes the cloud content stored in the cloud server. Further, when the selection for NO key 652 is detected from the input unit 210, the controller 651 deletes the selected cloud object, namely, metadata, in response thereto.

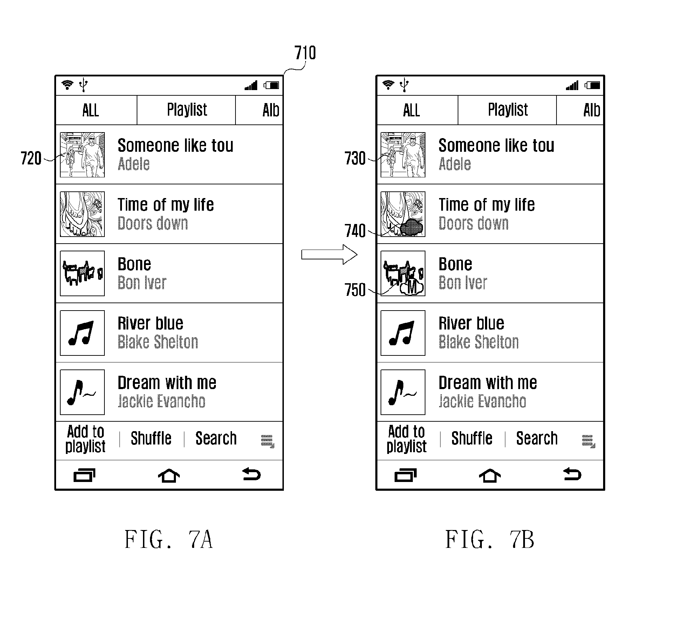

FIGS. 7A and 7B illustrate a method of displaying contents of a portable terminal according to embodiments of the present disclosure.

FIG. 7A shows a content list screen 710, under control of the controller 250, in screen 701 . Information on the local object corresponding to the local content and the cloud content based on the information on the cloud content, namely, metadata, is included in the content list screen 710. In the certain embodiments of the present disclosure, the display unit 220 displays the music content list screen 710 under control of the controller 250. In a state where the music content list screen 710 is displayed, a user may operate the input unit 210 for deletion of a certain content. Then the controller 250 determines that a request event for deletion of the content, namely, a content change condition, has occurred. Then, the controller 250 changes the display of the object 720 so that the local content may be easily distinguished from the cloud content. At this time, the display unit 220 changes the display of the object of three types of a content stored only in the portable terminal of the content, a content stored in the cloud server, and a content stored in both the portable terminal and the cloud server, as shown in FIG. 7B. For example, the display unit 220 displays a cloud display icon 740 in the object corresponding to the cloud content, displays a mobile display icon 750 in the object corresponding to the local content, and does not display the identifier in the case of a content that is stored in the cloud server and the content 730 that is stored in both the portable terminal and the cloud server.

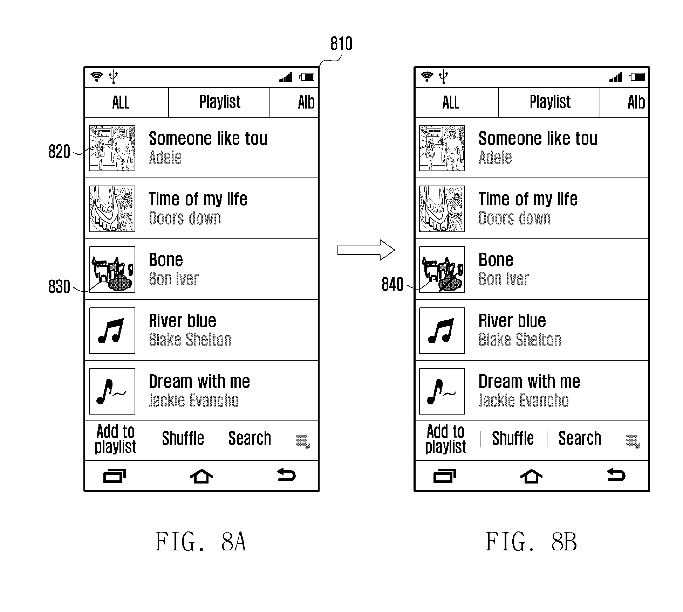

FIG. 8 illustrates a method of displaying contents of a portable terminal according to embodiments of the present disclosure.

Referring to FIGS. 8A, the display unit 220, under control of the controller 250, displays a content list screen 810 including the object 820 corresponding to the content as illustrated in screen 801. The display unit 220 can identify the cloud content and display the identifier such as the cloud display icon 830 in the cloud object under control of the controller. In such a state, the controller checks that a content display change condition has occurred by sensing that a network disconnection condition has occurred. Then the display unit 220 changes the icon of the cloud object corresponding to the content as a network connection impossible icon 840 as illustrated in screen 802 of FIG. 8B.

Not all modifications may be listed here due to the convergence trend of digital devices, but the portable terminal 100 according to the present disclosure may further include other components such as a sensor module for sensing information related with the location change of the portable terminal, a GPS module for measuring the location of the portable terminal 100, and a camera module. Further, some components of the portable terminal of the present disclosuremay be exempted or substituted by other components.

According to the present disclosure, a portable terminal using a cloud service receives metadata of contents stored in a cloud server. According to the present disclosure, the portable terminal recognizes the content display change condition and includes the condition identifier in the local object corresponding to the local content and the cloud object corresponding to the cloud content to display the source of the content. As such, a user may check whether the content used in the portable terminal is a local content stored in the portable terminal or a cloud content stored in the cloud server. Further, user may check the condition such as an upload, a download, and a network connection failure through the condition identifier displayed in the object corresponding to the content.

Although the present disclosure has been described with examples, various changes and modifications may be suggested to one skilled in the art. It is intended that the present disclosure encompass such changes and modifications as fall within the scope of the appended claims.

## Claims

1. A method of displaying a content of a portable terminal connectable with a cloud server, the method comprising:
displaying a content list including a first object corresponding to a first content stored in the portable terminal and a second object corresponding to a second content stored in the cloud server;
determining whether a condition for a display change of the content list has occurred; and
changing the second object to a third object and displaying the third object if the condition occurs.

2. The method of claim 1, wherein displaying of the content list comprises:
detecting a user input that requests a display of the content list;
making a connection to the cloud server in response to the user input;
receiving metadata of a content stored in the cloud server from the cloud server; and
displaying the second object based on the metadata.

3. The method of claim 1, wherein displaying of the content list comprises:
displaying each of the first object and the second object as a thumbnail.

4. The method of claim 1, wherein displaying of the content list comprises:
displaying at least one or a combination of a photo content list, a moving-image content list, a document content list, and a music content list.

5. The method of claim 1, wherein determining of whether the condition for the display change of the content list has occurred comprises:
determining that the condition for the display change has occurred if at least one of:
a condition of requesting for editing a content based on a user's input,
a condition of requesting for selecting a content,
a situation of requesting for sharing a content,
a condition of network disconnection based on a system input, and a condition of insufficient memory capacity occurs.

6. The method of claim 1, wherein displaying of the third object comprises:
including an identifier representing the second object and the second content in the third object and displaying the third object.

7. The method of claim 6, further comprising displaying the identifier in the second content,
wherein the identifier includes at least one of:
a cloud display icon,
a network connection-impossible icon,
a download ongoing icon,
an upload ongoing icon, and
a download and upload failure icon.

8. The method of claim 1, further comprising, after changing the second object to the third object and displaying the third object:
detecting a user request input associated with deletion of the second object;
displaying a message checking whether to delete the second content associated with the second object in response to detection of the request input; and
connecting to the cloud server and deleting the second content and the second object in response to detection of the request to delete the second content.

9. A portable terminal configured to use a cloud service, the portable terminal comprising:
a wireless communication unit configured to connect with a cloud server that provides a cloud service;
a display unit configured to display a first object corresponding to a first content stored in the portable terminal and a second object corresponding to a second content stored in the cloud server;
an input unit configured to recievea user input associated with the first content and the second content; and
a controller configured to:control
display a content list including the first object and the second object, determine whether a condition for a display change of the content list occurs, and
control to change the second object to a third object, and
display the third object.

10. The portable terminal of claim 9, wherein the wireless communication unit is configured to transmit a request message for connection with the cloud server and receive metadata of a second content stored in the cloud server.

11. The portable terminal of claim 9, wherein the display unit is configured to display at least one or a combination of a photo content list, a moving-image content list, a document content list and a music content list.

12. The portable terminal of claim 9, wherein the controller is configured to determine that a condition for a display change has occurred at least one of:
a condition of requesting for editing a content based on a user input;
a condition of requesting for selecting a content;
a condition of requesting for sharing a content;
a condition of network disconnection based on a system input;
condition of insufficient memory capacity.

13. The portable terminal of claim 9, wherein the third object includes the second object and an identifier representing a second content.

14. The portable terminal of claim 9, wherein, the controller is further configured to:
in response to detection of a deletion request input of the second object, display a message confirming whether to delete the second content, and
one of: delete the second object based on the user deletion request and delete the second content and the second object.

15. The portable terminal of claim 9, wherein displaying the content list comprises displaying each of the first object and the second object as a thumbnails.
